# EUROPÄISCHE PATENTSCHRIFT

(11) **EP 1 424 016 B1**
(45) Veröffentlichungstag und Bekanntmachung des Hinweises auf die Patenterteilung: **19.07.2006**
(21) Anmeldenummer: 02026655.7
(22) Anmeldetag: 29.11.2002
(51) Int. Cl.: A24C 5/18

(54) **Umlaufendes Förderband zum Fördern eines Strangs der tabakverarbeitenden Industrie**
Circulating conveyor belt for transporting a rod of the tobacco industry
Bande transporteuse pour le transport d'une tige de produit de l'industrie du tabac

(43) Veröffentlichungstag der Anmeldung: 02.06.2004
(73) Patentinhaber: Hauni Maschinenbau AG, 21033 Hamburg (DE)
(72) Erfinder: Eckert, Karsten, 22083 Hamburg (DE); Schmidt, Carsten, 22952 Lütjensee (DE); Heikens, Ralf, 21031 Hamburg (DE); Nittscher, Harald, 21033 Hamburg (DE)
(74) Vertreter: Eisenführ, Speiser & Partner

(56) Entgegenhaltungen:
- EP-A- 0 674 849
- EP-A- 1 158 287
- EP-A- 1 250 855
- DE-A- 4 014 659
- FR-A- 2 832 200
- GB-A- 746 105
- GB-A- 2 167 033
- US-A- 3 244 184
- US-A- 3 315 685

## Beschreibung

Die Erfindung betrifft einen Strangförderer zum Fördern eines Strangs der tabakverarbeitenden Industrie, mit einem umlaufenden Förderband, insbesondere einem Saugband eines Saugstrangförderers einer Zigarettenstrangmaschine und/oder einem Formatband einer Zigarettenstrangmaschine, zum Aufnehmen des Strangs, mit Führungsmitteln zum Führen des Förderbandes zumindest entlang einer eine Länge aufweisenden Förderstrecke, entlang der der Strang förderbar ist.

Derartige Strangförderer sind aus dem Stand der Technik bekannt. So zeigt beispielsweise die DE 3612490A1 der Anmelderin eine Einrichtung zum Überwachen eines Saugbandes auf Verschleiß. Bei diesem Stand der Technik werden aus dem Saugband vorstehende Fasern durch Lichtschranken erkannt und es wird die Anzahl der Schäden pro Umlauf ermittelt. Wenn diese Anzahl einen bestimmten Grenzwert überschreitet, wird eine Warnmeldung erzeugt. Weiterhin ist aus der DE 4014659A1 der Anmelderin eine Vorrichtung zum Bestimmen der Dichte eines Tabakstrangs offenbart. Bei dieser Vorrichtung wird der Tabakstrang mittels einer Lichtschranke durchleuchtet. Um einen Referenzwert für die Lichtdurchlässigkeit des Saugbandes zu erhalten, wird dieses auf dem rücklaufenden Trum mittels einer Refarenzlichtschranke durchleuchtel. Schwankungen der Lichtdurchlässigkeit des Saugbandes werden dann als Inciz für einen Verschleiß des Saugbandes interpretiert, so das bei einem Auftreten zu vieler Schadstellen eine Warnmeldung erzeugt werden kann.

Ein umlaufendes Förderband ist beispielsweise in der DE 3538928A1 der Anmelderin beschrieben. Dieser Stand der Technik zeigt ein Saugband, welches durch eine Spannrolle gespannt wird, die wiederum durch einen Druckluftzylinder mit Kraft beaufschlagt wird.

Die vorgenannten Förderbänder verschleißen auf Zigarettenstrangmaschinen vor allem im Tabakansaugbereich, in dem Abhebebereich, in dem der Tabak vom Förderband abgehoben wird, und im Bereich von Umlenkrollen zum Umlenken des Förderbandes. Da heutige Zigarettenstrangmaschinen Vorrichtungen zum Erkennen des Verschleißes zumeist nicht aufweisen, müssen die Saugbänder heutzutage auf Verdacht bzw. basierend auf den Erfahrungswerten eines Maschinenbedieners etwa alle acht bis zwölf Stunden gewechselt werden.

Aufgabe der vorliegenden Erfindung ist es, die bekannten Strangförderer der eingangs genannten Art zu verbessern.

Diese Aufgabe wird gemäß der Erfindung durch einen Strangförderer gemäß Anspruch 1 gelöst.

Die Erfindung erhöht durch die Verwendung eines längeren Förderbandes die Ausnutzung des Förderbandes. Dank der Erfindung lässt sich somit eine längere Laufleistung eines Förderbandes realisieren. Denn das Förderband ist zum einen länger und muss zum anderen nicht mehr auf Verdacht gewechselt werden. Denn anhand der gemessenen Auslenkung einer Spannrolle zum Spannen des Förderbandes lässt sich der Verschleiß wesentlich genauer abschätzen. Vor allem lässt sich auch ein nicht mit einem normalen Verlauf übereinstimmender ungewöhnlicher Verschleiß erkennen. So können beispielsweise fehlerhafte Förderbänder rechtzeitig erkannt und ausgetauscht werden.

Die Erfindung schließt die Erkenntnis ein, dass sich bei einem Verschleiß des Förderbandes die Auslenkung einer Spannrolle zum Spannen des Förderbandes ändert. Denn das Förderband erfährt in seiner Funktion eine Vielzahl von Umlenkungen, die es strapazieren. Dabei treten Reibkräfte zwischen dem Band und den Umlenkrollen auf, wobei Walgarbeit geleistet wird, so das das Förderband schließlich verschleißt. Durch einen solchen Verschleiß erfährt das Förderband eine Längendehnung, die durch die entsprechenden Spannrollen ausgeglichen wird. Wird nun diese Auslenkung mit Hilfe eines berührungsbehafteten oder berührungslosen Sensors erfasst, so kann diese Auslenkung als Maß für den Verschleiß oder die Abnutzung des Förderbandes ausgewertet werden. Eine solche Auswertung der Auslenkung führt bei im Folgenden näher erläuterten bevorzugten Ausführungsbeispielen der Erfindung zu einer ganzen Reihe von Vorteilen.

Als Sensor kann ein beliebiger Wegmesssensor zum Erfassen der Bewegung der Spannrolle oder eines zum Spannen der Spannrolle dienenden Spannzylinders dienen. Die erfasste Längendehnung des Bandes lässt sich dann als Maß für den Verschleiß oder die Abnutzung des Bandes nutzen.

Bevorzugt ist es, wenn die festgestellte Auslenkung mit einem vorgegebenen ersten Grenzwert verglichen und bei Überschreiten des Grenzwertes eine Warnmeldung angezeigt oder abgegeben wird. Dabei sollte der vorgegebene erste Grenzwert einem noch tolerierbaren Verschleiß des Bandes entsprechen. Auf diese Weise wird beispielsweise einem Bediener einer Zigarettenstrangmaschine rechtzeitig signalisiert, dass das Band demnächst ausgetauscht werden sollte. Dabei ist es vorteilhaft, wenn die Spannrolle beispielsweise mit Hilfe eines Spannzylinders mit einer konstanten Kraft beaufschlagt wird. Auf diese Weise ist auf jeden Fall sichergestellt, dass eine Veränderung der Position der Spannrolle allein auf einem Verschleiß des Bandes beruht.

Bei einem Wechsel des Förderbandes hat es sich als vorteilhaft herausgestellt, dass vor dem Wechsel die Auslenkung der Spannrolle gespeichert wird und nach dem Wechsel des Förderbandes mit der dann vorherrschenden aktuellen Auslenkung verglichen wird, um festzustellen, ob das selbe oder ein anderes Band eingelegt wurde. Auf diese Weise kann ausgeschlossen werden, dass versehentlich das gleiche, bereits verschlissene Band erneut eingelegt wird.

Um vor dem Wechsel die Auslenkung zu speichern lässt sich beispielsweise die Reaktion eines Bedieners der Maschine ausnutzen. Denn zum Wechseln des Bandes muss ein Druckluftzylinder zum Spannen der Spannrolle drucklos geschaltet werden, wodurch die jeweilige Spannrolle eine Wegverkürzung des Bandes bewirkt. Hierdurch wird das Band entspannt und lässt sich aus den Führungen entnehmen. Anschließend kann ein anderes oder ein neues Band in die Führungen eingelegt werden, wobei schließlich der Luftzylinder wieder aktiviert wird, so dass das neu eingelegte Band gespannt wird. Da der Bediener bei einem solchen Bandwechsel zumeist über einen Schalter die Spannvorrichtung drucklos schaltet, kann diese Betätigung eines solchen Schalters als Signal zum Abspeichern des aktuellen Wertes des Wegmesssensors von einer Steuerung der Spannvorrichtung herangezogen werden, bevor die Steuerung ein Ventil für das Lösen der Spannvorrichtung ansteuert. Wird nun ein neues Band aufgelegt und die Spannvorrichtung erneut betätigt, kann die Steuerung den aktuellen Wert des Wegmesssensors einlesen. Dieser kann dann in der Steuerung mit dem zuvor abgespeicherten Längenwert vor dem Drucklosschalten der Spannvorrichtung verglichen werden.

Ergibt ein solcher Vergleich keine Längendifferenz zwischen aktuellem und abgespeichertem Messwert, so wurde das selbe Band erneut eingelegt. Ergibt der Vergleich jedoch eine Längendifferenz zwischen aktuellem und abgespeichertem Messwert, die weiter bevorzugt einen eingestellten, parametrierbaren Grenzwert überschreitet, so wird festgestellt, dass das Band gewechselt wurde.

Mit dem zuvor beschriebenen erfindungsgemäßen Mechanismus kann mit Hilfe einer Steuerung erkannt werden, ob ein neues Band eingelegt worden ist, oder ob es sich um ein neues oder um ein altes Band handelt. Weiterhin kann auf diese Weise ein Bandwechsel mit Sicherheit detektiert werden, das heißt es können beispielsweise Verwechslungen zwischen einem einfachen Betätigen des Bandwechselschalters ohne Bandwechsel und einem tatsächlich ausgeführtem Bandwechsel vermieden werden. Eine Wechselquittierung ist daher nicht mehr notwendig.

Weiterhin ist es möglich einen sogenannten Teach-In Prozess durchzuführen, in dem ein neues und ein verschlissenes Band eingelegt werden. Dabei kann dann jeweils die Auslenkung für beide Fälle gespeichert und als Bezugsreferenz benutzt werden.

Bei einer weiteren bevorzugten Ausführungsform der Erfindung wird das Verfahren ohne einen Wert der Auslenkung für das alte Band durchgeführt, indem beim ersten Bandwechsel der Wert des Wegmesssensors vor dem Wechsel gespeichert wird und dem System als Referenz für einen Bandwechsel dient. Dabei ist es weiterhin möglich, die natürlichen Dehnungsschwankungen der Bänder durch Material- oder Produktionseinfluss über mehrere Wechselzyklen zu mitteln. Damit kann die optimale Nutzungsdauer eines Bandes ermittelt werden.

Auch kann der auf der Verpackung des Lieferanten des Förderbandes angegebene Längenwert der Bänder als Parameter vorgegeben werden. Ein solcher Längenwert kann dann einer Steuerung zur Verfügung gestellt werden, die dann über einen Vergleich der aktuellen Daten des Wegmesssensors mit den in der Steuerung vorhandenen Längendaten feststellen kann, inwieweit das aktuelle Band bereits verschlissen ist. Darüber hinaus lässt sich mit Hilfe einer solchen Steuerung erkennen, ob bei einem Bandwechsel ein neues Band aufgelegt worden ist, oder ob das Band nur einmal entspannt wurde, beispielsweise um die Lage des Bandes zu korrigieren.

Weiterhin ist es bei einer bevorzugten Ausführungsform der Erfindung möglich, festzustellen, ob ein Band korrekt eingelegt worden ist. Wurde beispielsweise eine Umlenkung beim Einlegen des Bandes übersehen, oder eine Umlenkung zu viel verwendet, kann dieser Fehler direkt von einer Steuerung über die Abfrage der Auslenkung bemerkt werden. Der Wert der Auslenkung kann dann von der Steuerung mit einem abgespeicherten Normwert für diese Bandlänge verglichen werden. Stellt die Steuerung dann eine Längendifferenz außerhalb eines vorgegebenen zweiten Grenzwertes fest, kann ein Bediener der Maschine oder eine Überwachungseinrichtung darüber informiert werden, dass das neue Band nicht richtig eingelegt wurde.

Bei einem anderen Ausführungsbeispiel der Erfindung wird die Auslenkung in regelmäßigen zeitlichen Abständen erfasst, um eine Verschleißkurve des Förderbandes zu erstellen. So kann mit Hilfe einer Steuerung der Messwert eines Sensors für die Auslenkung des Bandes zyklisch, beispielsweise alle zehn Minuten, abgespeichert werden.

Eine solche Verschleißkurve oder Kennlinie kann darüber hinaus für jedes Band abgespeichert werden, so dass über viele Bänder hinweg ein Mittelwert gebildet und dieser Mittelwert als sichere Grundlage für eine Qualitätskontrolle der Bänder verwendet werden kann. Denn die in einer Zigarettenproduktion verwendeten Bänder werden zumeist mit einer bestimmten Spezifikation gefertigt und von dem Maschinenbetreiber mit dieser Spezifikation eingekauft. Die vorgegebene gemittelte Verschleißkurve kann dann mit der jeweils aktuellen Bandverschleißkurve oder Kennlinie verglichen werden. Wird dabei festgestellt, dass eine Abweichung oberhalb eines dritten vorgegebenen Grenzwertes liegt, so kann dies dem Bediener oder einem Überwachungssystem übermittelt werden. Der Bediener kann auf diese Weise gegebenenfalls die gesamte Charge von angelieferten Bändern überprüfen, ob diese möglicherweise ebenfalls nicht der vorgegebenen Spezifikation entsprechen.

Weiterhin lässt sich mit Hilfe der erfindungsgemäßen Verschleißkurven auch ein zu schneller Verschleiß der Förderbänder erkennen. Ein solcher zu schneller Verschleiß kann neben fehlerhaften Bändern auch aus einer zu großen Strapazierung der Bänder durch die Maschine resultieren. Wird nun beispielsweise in einer Steuerung eine Speicherung von Veränderungen an Parametern, die einen direkten Einfluss auf den Bänderverschleiß haben, vorgenommen, so kann bei Auftreten eines zu schnellen Verschleißes ein Zusammenhang mit der Veränderung dieser Parameter hergestellt werden.

Schließlich ist es dank der Erfindung auch möglich, mit Hilfe der erfindungsgemäßen Verschleißkurven eine voraussichtliche Lebenserwartung der Förderbänder zu ermitteln. Denn durch das zyklische Abspeichern der Messwerte der Auslenkung kann eine Messwertvorhersage durchgeführt werden. Sind beispielsweise mehrere äquidistante Messpunkte bekannt, so kann der resultierende Kurvenverlauf der Verschleißkurve durch eine mathematische Funktion angenähert beschrieben werden. Auf diese Weise sind Vorhersagen mit einer gewissen Genauigkeit über den weiteren Verlauf der Verschleißkurve und somit die Lebensdauer des Bandes möglich. Diese voraussichtliche Lebensdauer kann einem Bediener oder einer Bewachungsanlage übermittelt werden. Insgesamt vermeidet das erfindungsgemäße Verfahren somit auf sichere Weise einen unerwarteten Riss des Förderbandes und somit einen nachteiligen Stillstand der Maschine.

Eine vorteilhafte Ausführungsform des erfindungsgemäßen umlaufenden Förderbandes zeichnet sich dadurch aus, dass es entlang der Förderstrecke in einer Bewegungsrichtung und außerhalb der Förderstrecke mindestens zweimal in im wesentlichen der gleichen Bewegungsrichtung geführt ist, wie entlang der Förderstrecke. Hierzu kann es beispielsweise ein rücklaufendes und um einen Antrieb zum Antreiben des Förderbandes geführtes Trum aufweisen, welches außerhalb der Förderstrecke und außerhalb des Antriebes in mindestens vier, bevorzugt in mindestens sechs, Schlaufen geführt ist. Dabei ist es vorteilhaft, wenn im Bereich der Schlaufen ein in die Schlaufe ein- und ein aus der Schlaufe auslaufendes Trum des Förderbandes im wesentlichen parallel zueinander verlaufend geführt ist. Auf diese Weise lässt sich das Band, welches erfindungsgemäß mindestens 2,5-fach, bevorzugt mehr als 3-fach, weiter bevorzugt mehr als 4-fach, so lang wie die Förderstrecke ist, in der Zigarettenstrangmaschine unterbringen, ohne das sich die Länge der Maschine vergrößert.

Ein bevorzugtes Ausführungsbeispiel der Erfindung weist ein rücklaufendes und um einen Antrieb zum Antreiben des Förderbandes geführtes Trum auf, welches außerhalb der Förderstrecke und außerhalb des Antriebes mindestens viermal seine Bewegungsrichtung um im wesentlichen 180° ändert. Dabei kann das rücklaufende Trum außerhalb der Förderstrecke und außerhalb des Antriebes um Umlenkmittel geführt sein, die seine Bewegungsrichtung mindestens viermal, bevorzugt mindestens sechsmal, im wesentlichen um 180° ändern. Die Umlenkmittel sind dabei bevorzugt als eine Umlenkrolle ausgeführt.

Weiter bevorzugt ist es, wenn das rücklaufende Trum um mindestens zwei Spannrollen zum Spannen des Förderbandes geführt ist. Dabei ist es vorteilhaft, wenn einige der Umlenkrollen, bevorzugt mindestens die Hälfte der die Bewegungsrichtung um 180° ändernden Umlenkrollen als Spannrollen ausgeführt sind. Auf diese Weise können viele kleine Spannzylinder zum Spannen des Förderbandes verwendet werden, so dass ein großer und somit teurer Spannzylinder vermieden wird.

Weitere bevorzugte Ausführungsbeispiele der Erfindung sind in den Unteransprüchen beschrieben.

Im folgenden werden anhand der Zeichnung zwei Ausführungsformen der Erfindung beschrieben.

Die Zeichnung zeigt:
- Figur 1: eine Zigarettenstrangmaschine der Anmelderin vom Typ Protos, in welcher die Erfindung realisiert ist;
- Figur 2: eine schematische Seitenansicht eines Saugstrangförderers gemäß der Erfindung in einer ersten Ausführungsform mit einfacher Saugbandumlenkung; und
- Figur 3: eine schematische Seitenansicht eines Saugstrangförderers gemäß der Erfindung in einer zweiten Ausführungsform mit mehrfacher Saugbandumlenkung.

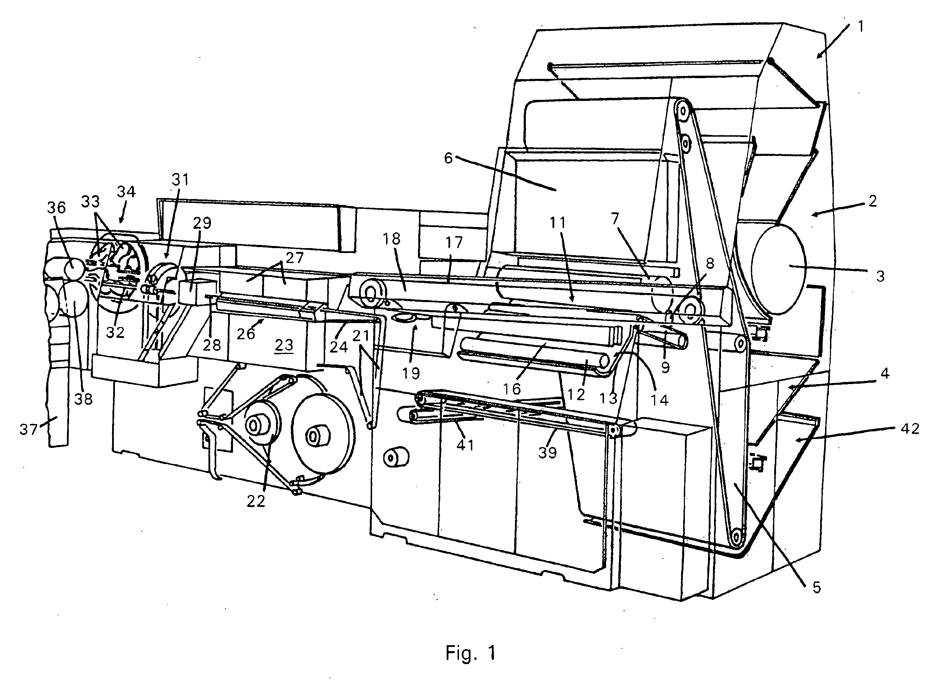

Figur 1 zeigt eine Zigarettenstrangmaschine der Anmelderin vom Typ Protos, in welcher die Erfindung realisiert ist. Von einer Schleuse 1 wird ein Vorverteiler 2 portionsweise mit Tabak beschickt. Eine Entnahmewalze 3 des Vorverteilers 2 ergänzt gesteuert einen Vorratsbehälter 4 mit Tabak, aus dem ein Steilförderer 5 Tabak entnimmt und einen Stauschacht 6 gesteuert beschickt. Aus dem Stauschacht 6 entnimmt eine Stiftwalze 7 einen gleichförmigen Tabakstrom, der von einer Ausschlagwalze 8 aus den Stiften der Stiftwalze 7 herausgeschlagen und auf ein mit konstanter Geschwindigkeit umlaufendes Streutuch 9 geschleudert wird. Ein auf dem Streutuch 9 gebildetes Tabakvlies wird in eine Sichteinrichtung 11 geschleudert, die im wesentlichen aus einem Luftvorhang besteht, den größere bzw. schwerere Tabakteile passieren, während alle anderen Tabakteilchen von der Luft in einen von einer Stiftwalze 12 und einer Wand 13 gebildeten Trichter 14 gelenkt werden.

Von der Stiftwalze 12 wird der Tabak in einen Tabakschacht 16 gegen einen Strangförderer 17 geschleudert, an dem der Tabak mittels in eine Unterdruckkammer 18 gesaugter Luft gehalten und ein Tabakstrang aufgeschauert wird. Ein Egalisator 19 entfernt überschüssigen Tabak von dem Tabakstrang, der dann auf einen im Gleichlauf geführten Zigarettenpapierstreifen 21 gelegt wird. Der Zigarettenpapierstreifen 21 wird von einer Bobine 22 abgezogen, durch ein Druckwerk 23 geführt und auf ein angetriebenes Formatband 24 gelegt. Das Formatband 24 transportiert den Tabakstrang und den Zigarettenpapierstreifen 21 durch ein Format 26, in dem der Zigarettenpapierstreifen 21 um den Tabakstrang gefaltet wird, so dass noch eine Kante absteht, die von einem nicht dargestellten Leimapparat in bekannter Weise beleimt wird. Darauf wird die Klebnaht geschlossen und von einer Tandem-Nahtplätte 27 getrocknet.

Ein so gebildeter Zigarettenstrang 28 durchläuft ein Strangdichtemessgerät 29, das den Egalisator 19 steuert, und wird von einem Messerapparat 31 in doppelt lange Zigaretten 32 geschnitten. Die doppelt langen Zigaretten 32 werden von einer gesteuerten Arme 33 aufweisenden Übergabevorrichtung 34 einer Übernahmetrommel 36 einer Filteransetzmaschine 37 übergeben, auf deren Schneidtrommel 38 sie mit einem Kreismesser in Einzelzigaretten geteilt werden.

Förderbänder 39 und 41 fördern überschüssigen Tabak in einen unter den Vorratsbehälter 4 angeordneten Behälter 42, aus dem der rückgeführte Tabak aus dem Steilförderer 5 wieder entnommen wird.

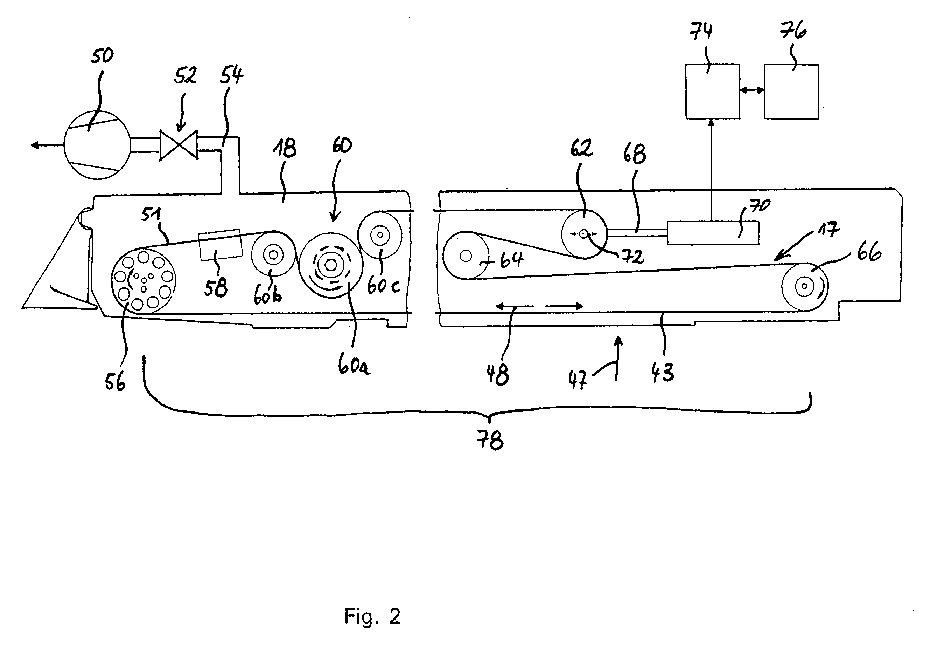

Figur 2 zeigt eine schematische Seitenansicht einer ersten Ausführungsform eines Saugstrangförderers gemäß der Erfindung, beispielsweise des Saugstrangförderers 17 einer Zigarettenstrangmaschine, wie sie im Zusammenhang mit Figur 1 beschrieben wurde. Auf dem unteren Trum 43 des Förderers 17, das in einem nicht dargestellten Tabakkanal mit zu der Unterdruckkammer 18 luftdurchlässigem Boden geführt ist, wird in einer nicht dargestellten, im wesentlichen unter dem rechten Ende des unteren Trums 43 liegenden Strangaufbauzone aus einem in Richtung eines Pfeils 47 zugeführten Tabakschauer in bekannter Weise ein nicht gezeigter Tabakstrang aufgeschauert und in Richtung eines Pfeils 48 von rechts nach links gefördert. Der Tabakstrang wird in bekannter Weise an dem aus einem textilen, gewebten Saugband bestehenden luftdurchlässigen Saugstrangförderer 17 mittels der Saugwirkung der Unterdruckkammer 18 festgehalten. Der Unterdruck in der Unterdruckkammer 18 wird mittels eines als Unterdruckquelle dienenden Gebläses 50, welches über eine eine Drossel 52 aufweisende Abluftleitung 54 mit der Unterdruckkammer 18 verbunden ist, erzeugt.

Der Saugstrangförderer 17 wird an dem in der Figur 2 links dargestellten Ende der Unterdruckkammer 18 in das Innere der Unterdruckkammer 18 mittels einer Umlenkrolle 56 abgelenkt. Das rücklaufende Trum 51 wird dann durch eine Lichtschranke 58 über eine Antriebsrollenanordnung 60 mit einer vom Maschinenantrieb der Zigarettenstrangmaschine angetriebenen Antriebsrolle 60a und Umlenkrollen 60b und 60c, eine Spannrolle 62 und zwei weitere Umlenkrollen 64 und 66 geführt. Die Spannrolle 62 ist über eine an ihrer Achse angreifende Hubstange 68 von einem Spannzylinder 70 mit einer in der Darstellung der Figur 2 nach rechts weisenden Spannkraft beaufschlagt. Der Spannzylinder 70 weist einen nicht dargestellten Wegmesssensor zum Feststellen einer durch den Doppelpfeil 72 symbolisierten Auslenkung der Spannrolle 62 auf. Der Spannzylinder ist mit einer Steuerung 74 verbunden, die einen Speicher 76 aufweist.

Das untere Trum 43 des Saugstrangförderers 17 bildet zwischen der Umlenkrolle 66 und der Umlenkrolle 56 eine Förderstrecke 78 für den Tabak, entlang der der Tabak förderbar ist.

In dem Speicher 76 befindet sich ein erster Grenzwert der Auslenkung 72. Stellt die Steuerung 74 fest, dass die Auslenkung 72 den ersten Grenzwert überschreitet, so gibt die Steuerung 74 eine optische oder akustische Warnmeldung ab. Alternativ kann die Steuerung 74 diese Warnmeldung auch an einen angeschlossenen nicht dargestellten Computer zur Überwachung der Zigarettenstrangmaschine abgeben. Der erste Grenzwert entspricht einem noch tolerierbaren Verschleiß des Förderbandes 17. Ein Bediener der Zigarettenstrangmaschine hat somit bei einem Auftreten dieser Warnmeldung noch rechtzeitig die Möglichkeit, das Förderband 17 auszutauschen.

Will der Bediener das Förderband 17 austauschen, so muss er einen nicht dargestellten Schalter zum Lösen der Spannkraft des Spannzylinders 70 betätigen. In diesem Moment erfasst die Steuerung 74 die Auslenkung 72 bevor sie den Spannzylinder 70 löst. Falls der Bediener das Förderband 17 ausgetauscht hat und den Spannzylinder 70 erneut aktiviert, so erfasst die Steuerung 74 erneut die Auslenkung 72 und vergleicht diese aktuelle Auslenkung 72 mit der gespeicherten Auslenkung 72. Tritt ein Unterschied zwischen beiden Auslenkungen 72 auf und übersteigt dieser Unterschied einen zweiten zuvor in dem Speicher 76 abgelegten zweiten Grenzwert, so ist klar, dass das Förderband 17 gewechselt wurde. Übersteigt der Unterschied diesen Grenzwert nicht, so wurde das Förderband 17 nicht gewechselt sondern nur der Spannzylinder 70 ohne Tausch des Förderbandes 17 ab- und angeschaltet.

In dem Speicher 76 kann weiterhin eine vorgegebene Auslenkung 72 für ein neues Förderband 17 abgespeichert sein. Wird nun ein neues Förderband 17 eingelegt und der Spannzylinder 70 von der Steuerung 74 aktiviert und eine Auslenkung 72 festgestellt, die stärker als ein vorgegebener Toleranzwert von der der vorgegebenen Länge des neuen Förderbandes 17 entsprechenden Auslenkung abweicht, so kann dem Bediener optisch oder akustisch eine Warnmeldung signalisiert werden, dass das Förderband 17 möglicherweise falsch eingelegt wurde. Dabei kann weiterhin je nach Richtung der Abweichung der Auslenkung 72 auch signalisiert werden, ob beim Einlegen des Förderbandes 17 eine Umlenkrolle 56, 62, 64, 66 vergessen oder gar zuviel verwendet wurde.

Schließlich erfasst die Steuerung 74 die Auslenkung 72 während des Betriebes des Saugstrangförderers in äquidistanten Zeitpunkten. Mit den an diesen Zeitpunkten gewonnenen Werten der Auslenkung 72 kann die Steuerung 74 eine Kennlinie oder eine Verschleißkurve des Förderbandes 17 erstellen. Diese kann dann mit einer vorgegebenen und in dem Speicher 76 abgelegten Verschleißkurve, die bspw. für den verwendeten Typ des Förderbandes 17 typisch ist, verglichen werden. Weicht die gemessene Verschleißkurve mehr als um einen vorgegebenen dritten Grenzwert von der vorgegebenen Verschleißkurve ab, so handelt es sich um einen zu schnellen Verschleiß des Förderbandes 17. Dieser zu schnelle Verschleiß kann ebenfalls optisch oder akustisch signalisiert oder an eine automatische computergestützte Überwachungseinheit weitergegeben werden.

In diesem Zusammenhang kann anhand der bisher gemessenen Einzelwerte der Verschleißkurve auch eine Lebenserwartung des Förderbandes 17 berechnet und optisch oder akustisch signalisiert oder an eine automatische computergestützte Überwachungseinheit weitergegeben werden. Auf diese Weise kann auch bei einem erhöhten, nicht der Normalität entsprechenden Verschleiß des Förderbandes 17 ein Riss desselben verhindert bzw. ein rechtzeitiger Wechsel desselben gewährleistet werden.

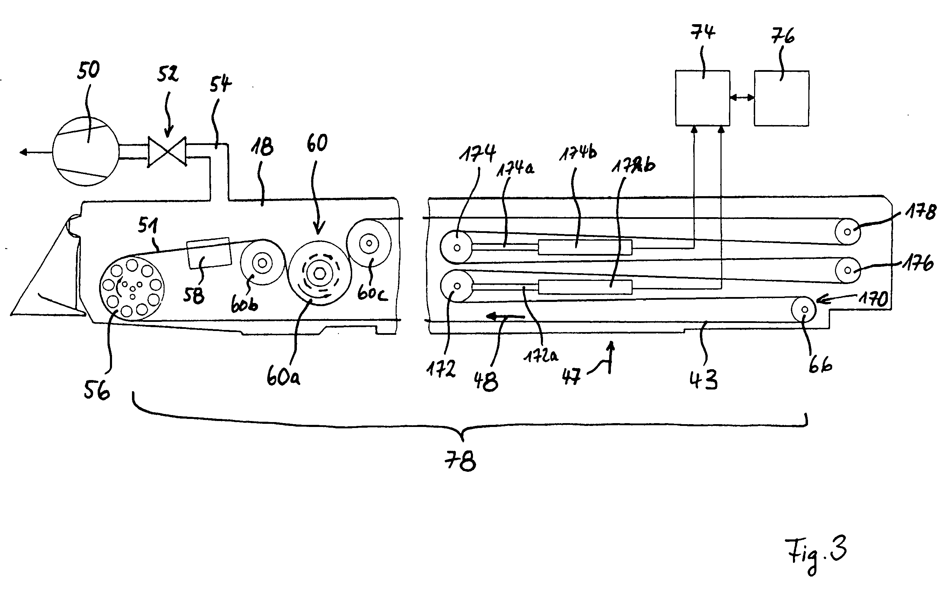

Fig. 3 zeigt eine schematische Seitenansicht einer zweiten Ausführungsform 170 eines Saugstrangförderers gemäß der Erfindung, beispielsweise des Saugstrangförderers einer Zigarettenstrangmaschine, wie sie im Zusammenhang mit Figur 1 beschrieben wurde. Teile, die denen der Figuren 1 und 2 entsprechen, sind mit den gleichen Bezugszeichen bezeichnet. Bzgl. der Beschreibung dieser Teile wird auf die obige Beschreibung der Figuren 1 und 2 verwiesen.

Im Gegensatz zu dem Förderband 17 der Figur 2 weist das Förderband 170 der Figur 3 etwa die vierfache Länge der Förderstrecke 78 auf. Um die Länge der Zigarettenstrangmaschine, in der ein solcher Saugstrangförderer 170 zum Einsatz kommt, nicht zu vergrößern, ist das Förderband 170 innerhalb der Unterdruckkammer 18 in Schlaufen um zwei Spannrollen 172, 174 und um zwei Umlenkrollen 176, 178 geführt, die alle die Bewegungsrichtung 48 des Förderbandes 170 im wesentlichen um 180° verändern. Beide Spannrollen 172, 174 werden über Hubstangen 172a, 174a von Spannzylindern 172b, 174b in der Figur 3 nach links gerichtet mit Kraft beaufschlagt. Die Spannzylinder 172b, 174b weisen jeweils einen Wegmesssensor zur Messung der Auslenkung der Spannrollen 172, 174 auf und werden jeweils von der Steuerung 74 kontrolliert.

Bei der zweiten Ausführungsform gemäß Figur 3 wird das erfindungsgemäße Verfahren im wesentlichen wie bei der ersten Ausführungsform gemäß Figur 2 von der Steuerung 74 ausgeführt. Allerdings hält das Förderband 170 aufgrund seiner wesentlich größeren Länge erheblich länger, da es pro Längeneinheit einen wesentlich geringeren Verschleiß erleidet.

Entsprechend den mit Bezug auf die Figuren 1-3 beschriebenen Ausführungsformen mit als Saugband ausgebildeten Förderbändern 17 bzw. 170 kann die Erfindung auch auf das Formatband 24 angewendet werden.

## Patentansprüche

1. Strangförderer zum Fördern eines Strangs der tabakverarbeitenden Industrie, mit einem umlaufenden Förderband (17), insbesondere einem Saugband (17) eines Saugstrangförderers einer Zigarettenstrangmaschine und/oder einem Formatband (24) einer Zigarettenstrangmaschine, zum Aufnehmen des Strangs, mit Führungsmitteln (60, 62, 64, 172, 174, 176, 178) zum Führen des Förderbandes (17) zumindest entlang einer eine Länge aufweisenden Förderstrecke (78), entlang der der Strang förderbar ist, **dadurch gekennzeichnet, dass** die Führungsmittel (60, 62, 64, 172, 174, 176, 178) ausgebildet sind, um das Förderband (17) entlang der Förderstrecke (78) in einer Bewegungsrichtung (48) und außerhalb der Förderstrecke (78) mindestens zweimal in im wesentlichen der gleichen Bewegungsrichtung (48) zu führen, wie entlang der Förderstrecke (78).

2. Strangförderer nach dem vorstehenden Anspruch,
wobei das Förderband (17) ein rücklaufendes und um einen Antrieb (60) zum Antreiben des Förderbandes (17) geführtes Trum (51) aufweist und die Führungsmittel (60, 62, 64, 172, 174, 176, 178) das Förderband (17) außerhalb der Förderstrecke (78) und außerhalb des Antriebes (60) in mindestens 4, bevorzugt in mindestens 6, Schlaufen führen.

3. Strangförderer nach dem vorstehenden Anspruch,
wobei die Führungsmittel (60, 62, 64, 172, 174, 176, 178) im Bereich der Schlaufen ein in die Schlaufe ein- und ein aus der Schlaufe auslaufendes Trum (51) des Förderbandes (17) im wesentlichen parallel zueinander verlaufend führen.

4. Strangförderer nach einem der vorstehenden Ansprüche,
wobei das Förderband (17) ein rücklaufendes und um einen Antrieb (60) zum Antreiben des Förderbandes (17) geführtes Trum (51) aufweist und die Führungsmittel (60, 62, 64, 172, 174, 176, 178) die Bewegungsrichtung (48) des Förderbandes (17) außerhalb der Förderstrecke (78) und außerhalb des Antriebes (60) mindestens viermal um im wesentlichen 180° ändern.

5. Strangförderer nach einem der vorstehenden Ansprüche,
wobei das Förderband (17) ein rücklaufendes und um einen Antrieb (60) zum Antreiben des Förderbandes (17) geführtes Trum (51) aufweist und die Führungsmittel (60, 62, 64, 172, 174, 176, 178) Umlenkmittel (62, 64, 172, 174, 176, 178) zum Umlenken des Förderbandes (17) außerhalb der Förderstrecke (78) und außerhalb des Antriebes (60) aufweisen, so dass die Umlenkmittel (62, 64, 172, 174, 176, 178) die Bewegungsrichtung (48) des Förderbandes (17) außerhalb der Förderstrecke (78) und außerhalb des Antriebes (60) mindestens viermal, bevorzugt mindestens sechsmal, um im wesentlichen 180° ändern.

6. Strangförderer nach dem vorstehenden Anspruch,
wobei das Förderband (17) für jede Änderung der Bewegungsrichtung (48) um im wesentlichen 180° um eine Umlenkrolle (62, 64, 172, 174, 176, 178) geführt ist.

7. Strangförderer nach einem der vorstehenden Ansprüche,
wobei das Förderband (17) ein rücklaufendes und um einen Antrieb (60) zum Antreiben des Förderbandes (17) geführtes Trum (51) aufweist und die Führungsmittel (60, 62, 64, 172, 174, 176, 178) außerhalb der Förderstrecke (78) und außerhalb des Antriebes (60) Spannrollen (62, 172, 174) zum Spannen des Förderbandes (17) aufweisen, so dass das Förderband (17) außerhalb der Förderstrecke (78) und außerhalb des Antriebes (60) um mindestens zwei Spannrollen (62, 172, 174) geführt ist.

8. Strangförderer nach den beiden vorstehenden Ansprüchen,
wobei mindestens die Hälfte der die Bewegungsrichtung (48) um 180° ändernden Umlenkrollen (62, 64, 172, 174, 176, 178) als Spannrollen (62, 172, 174) ausgeführt sind.

9. Strangförderer nach dem vorstehenden Anspruch,
wobei für jeweils eine und/oder für jeweils zwei Spannrollen (62, 172, 174) ein Spannzylinder (70, 172b, 174b) zum Spannen der jeweiligen Spannrolle (62, 172, 174) und/oder Spannrollen (62, 172, 174) vorgesehen ist.

10. Strangförderer nach einem der vorstehenden Ansprüche,
wobei die Führungsmittel (60, 62, 64, 172, 174, 176, 178) eine Spannrolle (62, 172, 174) aufweisen, um das Förderband (17) zu spannen,
**gekennzeichnet durch** einen Sensor zum Messen einer Auslenkung (72) der Spannrolle (62, 172, 174).

11. Strangförderer nach dem vorstehenden Anspruch,
mit einer mit dem Sensor verbundenen, einen Speicher (76) aufweisenden Steuerung (74) zum Auswerten der gemessenen Auslenkung (72) mit Hilfe von bestimmten, in dem Speicher (76) abgelegten Grenzwerten für die Auslenkung (72).

12. Strangförderer nach einem der vorstehenden Ansprüche,
wobei das Förderband (17) eine Länge aufweist, die mindestens dem 2,5fachen der Länge der Förderstrecke (78) entspricht.

13. Zigarettenstrangmaschine mit einem Strangförderer nach einem der vorstehenden Ansprüche.

## Claims

1. Rod conveyor for conveying a rod of the tobacco-processing industry, comprising a circulating conveyor belt (17), in particular a suction belt (17) of a suction rod conveyor of a cigarette rod machine and/or a formatting belt (24) of a cigarette rod machine, for receiving the rod, comprising guide means (60, 62, 64, 172, 174, 176, 178) for guiding the conveyor belt (17) at least along a conveying section (78) comprising a length along which the rod can be conveyed, **characterised in that** the guide means (60, 62, 64, 172, 174, 176, 178) are constructed to guide the conveyor belt (17) along the conveying section (78) in a direction of movement (48) and, outside the conveying section (78), at least twice in substantially the same direction of movement (48) as along the conveying section (78).

2. Rod conveyor according to the preceding claim, wherein the conveyor belt (17) comprises a returning strand (51) guided around a drive (60) for driving the conveyor belt (17), and the guide means (60, 62, 64, 172, 174, 176, 178) guide the conveyor belt (17) outside the conveying section (78) and outside the drive (60) in at least four, preferably in at least six, loops.

3. Rod conveyor according to the preceding claim, wherein, in the region of the loops, the guide means (60, 62, 64, 172, 174, 176, 178) guide a strand (51) running into the loop and a strand (51) running out of the loop of the conveyor belt (17) so as to run substantially parallel to each other.

4. Rod conveyor according to any one of the preceding claims, wherein the conveyor belt (17) comprises a returning strand (51) guided around a drive (60) for driving the conveyor belt (17), and the guide means (60, 62, 64, 172, 174, 176, 178) change the direction of movement (48) of the conveyor belt (17) outside the conveying section (78) and outside the drive (60) at least four times by substantially 180°.

5. Rod conveyor according to any one of the preceding claims, wherein the conveyor belt (17) comprises a returning strand (51) guided around a drive (60) for driving the conveyor belt (17), and the guide means (60, 62, 64, 172, 174, 176, 178) comprise deflection means (62, 64, 172, 174, 176, 178) for deflecting the conveyor belt (17) outside the conveying section (78) and outside the drive (60), so that the deflection means (62, 64, 172, 174, 176, 178) change the direction of movement (48) of the conveyor belt (17) outside the conveying section (78) and outside the drive (60) at least four times, preferably at least six times, by substantially 180°.

6. Rod conveyor according to the preceding claim, wherein for each change in the direction of movement (48), the conveyor belt (17) is guided around a deflection roller (62, 64, 172, 174, 176, 178) by substantially 180°.

7. Rod conveyor according to any one of the preceding claims, wherein the conveyor belt (17) comprises a returning strand (51) guided around a drive (60) for driving the conveyor belt (17), and the guide means (60, 62, 64, 172, 174, 176, 178) outside the conveying section (78) and outside the drive (60) comprise tension rollers (62, 172, 174) for tensioning the conveyor belt (17), so that the conveyor belt (17) outside the conveying section (78) and outside the drive (60) is guided around at least two tension rollers (62, 172, 174).

8. Rod conveyor according to the two preceding claims, wherein at least half of the deflection rollers (62, 64, 172, 174, 176, 178) changing the direction of movement (48) by 180° are constructed as tension rollers (62, 172, 174).

9. Rod conveyor according to the preceding claim, wherein for one respective and/or for two respective tension roller(s) (62, 172, 174) a tension cylinder (70, 172b, 174b) for tensioning the respective tension roller (62, 172, 174) and/or tension rollers (62, 172, 174) is provided.

10. Rod conveyor according to any one of the preceding claims, wherein the guide means (60, 62, 64, 172, 174, 176, 178) comprise a tension roller (62, 172, 174) to tension the conveyor belt (17), **characterised by** a sensor for measuring a deflection (72) of the tension roller (62, 172, 174).

11. Rod conveyor according to the preceding claim, comprising a controller (74), connected to the sensor and comprising a memory (76), for evaluating the measured deflection (72) with the aid of specific limit values, stored in the memory (76), for the deflection (72).

12. Rod conveyor according to any one of the preceding claims, wherein the conveyor belt (17) has a length which corresponds to at least 2.5 times the length of the conveying section (78).

13. Cigarette rod machine comprising a rod conveyor according to any one of the preceding claims.

## Revendications

1. Transporteur de boudin pour le transport d'un boudin de l'industrie de transformation du tabac, comportant
une bande transporteuse (17) animée d'un mouvement de circulation, en particulier une bande aspirante (17) d'un transporteur de boudin à aspiration d'une machine à confectionner des boudins de cigarette et/ou une bande de mise au format (24) d'une machine à confectionner des boudins de cigarette, destinée à recevoir le boudin,
des moyens de guidage (60, 62, 64, 172, 174, 176, 178) destinés à guider la bande transporteuse (17) au moins le long d'une section de transport (78) présentant une longueur sur laquelle le boudin est transportable, **caractérisé en ce que** les moyens de guidage (60, 62, 64, 172, 174, 176, 178) sont conçus pour guider la bande transporteuse (17) le long de la section de transport (78) dans une direction de déplacement (48) et, à l'extérieur de la section de transport (78), au moins deux fois suivant sensiblement la même direction de déplacement (48) que le long de la section de transport (78).

2. Transporteur de boudin selon la revendication précédente,
dans lequel la bande transporteuse (17) présente un brin (51) circulant dans le sens du retour et guidé autour d'un dispositif d'entraînement (60), destiné à entraîner la bande transporteuse (17), et les moyens de guidage (60, 62, 64, 172, 174, 176, 178) guident la bande transporteuse (17), à l'extérieur de la section de transport (78) et à l'extérieur du dispositif d'entraînement (60), suivant au moins 4, de préférence suivant au moins 6, boucles.

3. Transporteur de boudin selon la revendication précédente,
dans lequel les moyens de guidage (60, 62, 64, 172, 174, 176, 178) guident, dans la région des boucles, suivant des directions d'extension sensiblement parallèles l'une à l'autre, un brin (51), arrivant dans la boucle, de la bande transporteuse (17) et un brin (51) sortant de la boucle.

4. Transporteur de boudin selon l'une des revendications précédentes,
dans lequel la bande transporteuse (17) présente un brin (51) circulant dans le sens du retour et guidé autour d'un dispositif d'entraînement (60), destiné à entraîner la bande transporteuse (17), et les moyens de guidage (60, 62, 64, 172, 174, 176, 178) modifient au moins quatre fois, de 180° sensiblement, la direction de déplacement (48) de la bande transporteuse (17), à l'extérieur de la section de transport (78) et à l'extérieur du dispositif d'entraînement (60).

5. Transporteur de boudin selon l'une des revendications précédentes,
dans lequel la bande transporteuse (17) présente un brin (51) circulant dans le sens du retour et guidé autour d'un dispositif d'entraînement (60), destiné à entraîner la bande transporteuse (17), et les moyens de guidage (60, 62, 64, 172, 174, 176, 178) présentent des moyens de changement de direction (62, 64, 172, 174, 176, 178) destinés à changer la direction de la bande transporteuse (17) à l'extérieur de la section de transport (78) et à l'extérieur du dispositif d'entraînement (60), de telle façon que les moyens de changement de direction (62, 64, 172, 174, 176, 178) modifient au moins quatre fois, de préférence au moins six fois, de 180° sensiblement, la direction de déplacement (48) de la bande transporteuse (17), à l'extérieur de la section de transport (78) et à l'extérieur du dispositif d'entraînement (60).

6. Transporteur de boudin selon la revendication précédente,
dans lequel la bande transporteuse (17) est guidée autour d'un rouleau de changement de direction (62, 64, 172, 174, 176, 178) pour chaque modification de la direction de déplacement (48) de 180° sensiblement.

7. Transporteur de boudin selon l'une des revendications précédentes,
dans lequel la bande transporteuse (17) présente un brin (51) circulant dans le sens du retour et guidé autour d'un dispositif d'entraînement (60), destiné à entraîner la bande transporteuse (17), et les moyens de guidage (60, 62, 64, 172, 174, 176, 178) présentent, à l'extérieur de la section de transport (78) et à l'extérieur du dispositif d'entraînement (60), des rouleaux de mise en tension (62, 172, 174) destinés à tendre la bande transporteuse (17), de telle façon que la bande transporteuse (17) soit guidée, à l'extérieur de la section de transport (78) et à l'extérieur du dispositif d'entraînement (60), autour d'au moins deux rouleaux de mise en tension (62, 172, 174).

8. Transporteur de boudin selon les deux revendications précédentes,
dans lequel au moins la moitié des rouleaux de changement de direction (62, 64, 172, 174, 176, 178) modifiant la direction de déplacement (48) de 180°, sont réalisés sous la forme de rouleaux de mise en tension (62, 172, 174).

9. Transporteur de boudin selon la revendication précédente,
dans lequel pour chacun des rouleaux de mise en tension (62, 172, 174) et/ou pour chaque fois deux rouleaux de mise en tension, il est prévu un vérin de mise en tension (70, 172b, 174b) destiné à exercer un effort de tension sur le rouleau de mise en tension (62, 172, 174) considéré et/ou les rouleaux de mise en tension (62, 172, 174) considérés.

10. Transporteur de boudin selon l'une des revendications précédentes,
dans lequel les moyens de guidage (60, 62, 64, 172, 174, 176, 178) présentent un rouleau de mise en tension (62, 172, 174), pour tendre la bande transporteuse (17),
**caractérisé par** un capteur destiné à mesurer une excursion (72) du rouleau de mise en tension (62, 172, 174).

11. Transporteur de boudin selon la revendication précédente,
comportant une commande (74) reliée au capteur et présentant une mémoire (76), pour évaluer l'excursion mesurée (72) à l'aide de valeurs limites déterminées pour l'excursion (72), déposées dans la mémoire (76).

12. Transporteur de boudin selon l'une des revendications précédentes,
dans lequel la bande transporteuse (17) présente une longueur qui correspond au moins à 2,5 fois la longueur de la section de transport (78).

13. Machine à confectionner des boudins de cigarette comportant un transporteur de boudin selon l'une des revendications précédentes.
